# EUROPEAN PATENT SPECIFICATION

(11) **EP 2 836 689 B1**
(45) Date of publication and mention of the grant of the patent: **15.06.2016**
(21) Application number: 13711445.0
(22) Date of filing: 20.02.2013
(51) Int. Cl.: F01N 13/02, F01N 3/20, F01N 3/10

(54) **ARRANGEMENT FOR TREATING EXHAUST GASES OF AN INTERNAL COMBUSTION PISTON ENGINE, AN INTERNAL COMBUSTION PISTON ENGINE AND METHOD OF TREATING EXHAUST GAS OF AN INTERNAL COMBUSTION PISTON ENGINE**
ANORDNUNG ZUR VERARBEITUNG VON ABGASEN EINER HUBKOLBENBRENNKRAFTMASCHINE, HUBKOLBENBRENNKRAFTMASCHINE UND VERFAHREN ZUR VERARBEITUNG VON ABGASEN EINER HUBKOLBENBRENNKRAFTMASCHINE
SYSTÈME DE TRAITEMENT DE GAZ D'ÉCHAPPEMENT D'UN MOTEUR À COMBUSTION INTERNE À PISTONS, MOTEUR À COMBUSTION INTERNE À PISTONS ET PROCÉDÉ DE TRAITEMENT DE GAZ D'ÉCHAPPEMENT D'UN MOTEUR À COMBUSTION INTERNE À PISTONS

(30) Priority: 13.04.2012 FI 20125408
(43) Date of publication of application: 18.02.2015
(73) Proprietor: Wärtsilä Finland Oy, 65380 Vaasa (FI)
(72) Inventor: WIDJESKOG, Klaus, FI-65730 Jungsund (FI)
(74) Representative: Genip Oy
(86) International application number: PCT/FI2013/050192
(87) International publication number: WO 2013/153257

(56) References cited:
- EP-A1- 0 688 941
- EP-A2- 0 953 738
- WO-A1-2004/097195
- WO-A1-2005/106219
- DE-A1-102010 005 814

## Description

### Technical field

Invention relates to an arrangement for reducing exhaust gas emissions of an internal combustion piston engine comprising a first gas treatment section arranged in a first enclosure and comprising a gas inlet and a gas outlet, and a second gas treatment section arranged in a second enclosure and comprising a gas inlet and a gas outlet, as disclosed in e.g. EP 0688941.

Invention relates also to an internal combustion piston engine provided with an arrangement for treating exhaust gases and method of treating exhaust gases of an internal combustion piston engine.

### Background art

Exhaust gas emission requirements of internal combustion piston engines become more and more stringent. In order to cope with such requirements there are various techniques available by means of which the gaseous emissions may be controlled when the engine is running. On the other hand, it is not desirable that the overall performance of the engine will suffer resulted from actions aiming to reduce the emissions.

Especially catalysts are commonly used to speed up reactions of certain substances contained by the exhaust gases of internal combustion piston engines. Such substances are for example nitrogen oxides, hydrocarbons such as methane, carbon oxides etc.

Additionally, when striving after considerably low emissions in internal combustion piston engines 2-stage charging is an efficient way to reduce NOx emissions.

When utilizing a catalytic emission reduction system in connection with internal combustion piston engines there are several issues to consider. Firstly, the location of the system in the exhaust gas stream more or less defines the available temperature range in which the catalyst is to operate. Typically such a catalyst should be located next to turbine section(s) of the engine i.e. quite near to the engine. Secondly, a risk of fouling and clogging is always an issue to consider, particularly in connection with engines operating with e.g. heavy fuel oil, although soot formation may take place with gas operated engines, too. Thirdly, the space requirements set of a catalytic emission reduction system are typically considerable. The general aim is to spend as little space as possible.

It is an object of the invention to provide an arrangement for treating exhaust gases of an internal combustion piston engine and an internal combustion piston engine, which solves at least one of the above mentioned problems of prior art.

### Disclosure of the Invention

Objects of the invention are substantially met by an arrangement for reducing exhaust gas emissions of an internal combustion piston engine comprising a first gas treatment section arranged in a first enclosure and comprising a gas inlet and a gas outlet, and a second gas treatment section arranged in a second enclosure and comprising a gas inlet and a gas outlet. It is characteristic to the invention that the first enclosure is enclosed by the second enclosure and that the gas inlet and the gas outlet of the first enclosure open outside the second enclosure.

This arrangement when suitably coupled to an exhaust system of an internal combustion turbocharged piston engine provides such an effect that the pressure difference and temperature difference over the walls of the first enclosure may be arrange considerably low enhancing the operation of the gas treatment sections and lightening the constructional requirements of the assembly.

According to an embodiment of the invention the gas inlet of the first enclosure and the gas outlet of the second enclosure are arranged at a first end of the arrangement, and that the gas outlet of the first enclosure and the gas inlet of the second enclosure are arranged at a second end of the arrangement.

According to an embodiment of the invention second gas treatment section is arranged around the first gas treatment section.

According to an embodiment of the invention first gas treatment section comprises an oxidation catalyst and a second gas treatment section comprises a SCR unit.

According to an embodiment of the invention the first enclosure and the second enclosure are enclosed by a third enclosure.

According to an embodiment of the invention the arrangement comprises a first internal valve which controls a direct flow path between the gas inlet of the first enclosure and gas outlet of the second enclosure

According to an embodiment of the invention the arrangement comprises a second internal valve which controls a direct flow path between the gas outlet of the first enclosure and gas inlet of the second enclosure

According to an embodiment of the invention the arrangement comprises a third internal valve which controls a direct flow path between the gas outlet of the second enclosure and gas inlet of the third enclosure.

Objects of the invention are substantially met by an internal combustion piston engine comprising a first turbocharger unit having a first compressor part and a first turbine part, and a second turbocharger unit having a second compressor part and a second turbine part, said units arranged in to the combustion engine at a first location and at a second location, respectively. It is characteristic to the invention that the piston engine provided with an arrangement for reducing exhaust gas emissions according to anyone of the claims 1 - 8, and that an exhaust gas outlet of the piston engine is connected to the gas inlet of the first gas treatment section, and that the gas outlet of the first gas treatment section is connected to the first turbine part, and that the first turbine part is connected to the gas inlet of the second gas treatment section, and that the gas outlet of the second gas treatment section is connected to the second turbine part.

In this context the term "connected to" is to be understood broadly i.e. meaning "being in flow communication with".

Objects of the invention are substantially met by a method of treating exhaust gas of an internal combustion piston engine comprising the steps of exhausting exhaust gas from the combustion engine, leading exhaust gas into a first gas treatment section and subjecting the gas to a first treatment process, leading exhaust gas from the first gas treatment section to a first turbine section of the engine, causing the exhaust gas to perform work in the first turbine part of the engine operating a first compressor part of the engine, leading exhaust gas from the first turbine part to a second gas treatment section and subjecting the gas to a second treatment process. The invention is characterized by arranging the exhaust gas in the first exhaust gas treatment section to flow so that it is surrounded by the flow of the exhaust gas in the second gas treatment section.

According to an embodiment of the invention a portion of the exhaust gas is controlled to by-pass the first turbine section into the second enclosure.

Thus, a portion or all of the exhaust gas may be directed from the inlet of the first gas treatment section to the outlet of the second gas treatment section.

According to an embodiment of the invention a portion of the exhaust gas is controlled to by-pass the first exhaust gas treatment section and the first turbine section after the inlet and arranged to flow.

Thus, a portion or all of the exhaust gas may be directed from the outlet of the first gas treatment section to the inlet of the second gas treatment section.

According to an embodiment of the invention a portion of the exhaust gas is controlled to by-pass the second turbine section.

According to an embodiment of the invention heat is transferred from exhaust gas during the first gas treatment process and recovering the heat to the exhaust gas during the second gas treatment process.

Invention provides several benefits. For example the arrangement according to the invention ensures to have high enough exhaust gas temperature at the first and the second gas treatment sections to enable proper pollutant reduction. Also the waste gate over the first turbine part is short and there is less risk for overheating the first, high pressure turbine part. By means of the invention it is possible to obtain combined high total hydrocarbon reduction, such as methane reduction, as well as high NOx reduction in a compact and efficient emission control module.

### Brief Description of Drawings

In the following, the invention will be described with reference to the accompanying exemplary, schematic drawings, in which
- Figure 1 illustrates an internal combustion piston engine according to an embodiment of the invention,
- Figure 2 illustrates an internal combustion piston engine according to another embodiment of the invention,
- Figure 3 illustrates an internal combustion piston engine according to another embodiment of the invention,
- Figure 4 illustrates an internal combustion piston engine according to another embodiment of the invention, and
- Figure 5 illustrates an internal combustion piston engine according to another embodiment of the invention.

### Detailed Description of Drawings

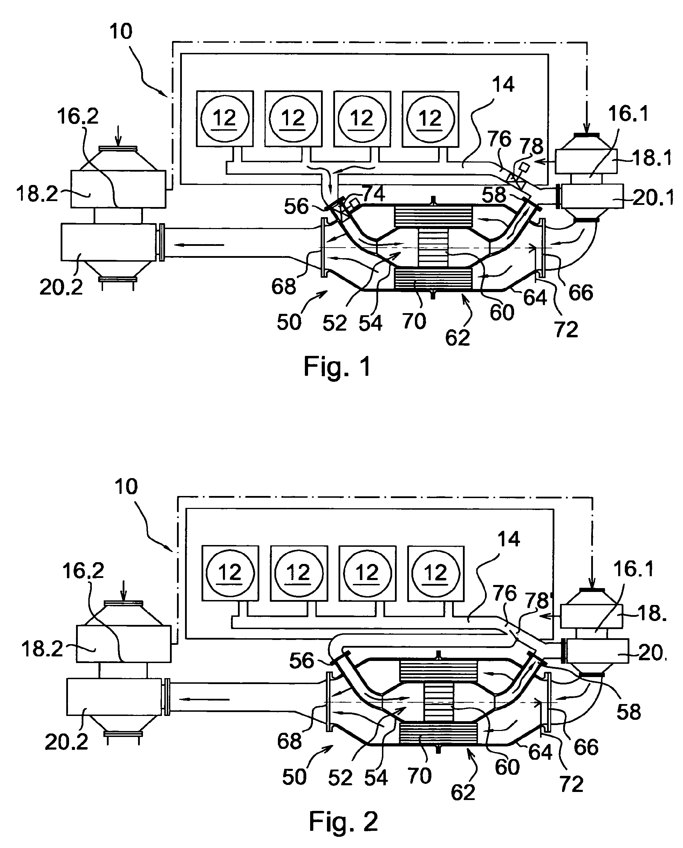

Figure 1 depicts schematically an internal combustion piston engine 10. The engine 10 comprises is cylinders 12 in which combustion is taken place when the engine is operating. Each cylinder 12 is in connection with an exhaust manifold 14 acting as an exhaust gas outlet though which the exhaust gases are removed from the engine.

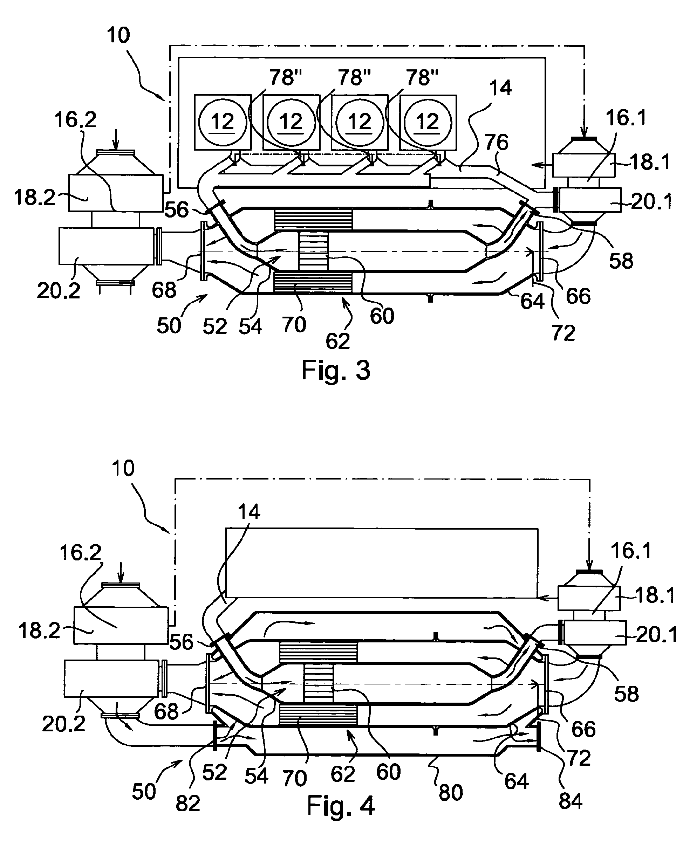

The engine 10 is provided with a first turbocharger unit 16.1 having a first compressor part 18.1 and a first turbine part 20.1. The engine is also provided with a second turbocharger unit 16.2 having a second compressor part 18.2 and a second turbine part 20.2. In the embodiment of figure 4 the compressor parts are connected in series to supply pressurized combustion air to the engine. The first turbocharger unit 16.1 is arranged to the combustion engine at a first location and the second turbocharger unit 16.2 is arranged to the combustion engine at a second, different location. The first turbocharger unit 16.1 is arranged to a first end of the combustion engine and the second turbocharger unit 16.2 is arranged to a second end of the combustion engine. The turbocharger units may alternatively be positioned to one end of the engine or at a side of the engine or as separate installation at a distance from the engine.

The piston engine provided with an arrangement for treating exhaust gases 50. The distance between the first and the second locations may be used according to an embodiment of the invention to place the arrangement for treating exhaust gases beside or on top of the engine.

The arrangement for treating exhaust gases 50 comprises a first gas treatment section 52 arranged in a first enclosure 54. The first gas treatment section and also the first enclosure 54 is provided with a gas inlet 56 and a gas outlet 58 with a flange or alike at the opposite ends of the arrangement. The first gas treatment section 52 is a gas tight unit through which the exhaust gas may be arranged to flow by feeding the gas in via the gas inlet 56 into the enclosure and taking the gas out of the enclosure via the gas outlet 58. In the enclosure there is a first gas treatment unit 60 arranged through which the gas is arranged to flow and simultaneously subjected to a treatment as will be explained later.

Further, the arrangement 50 for treating exhaust gases comprises a second gas treatment section 62 arranged in a second enclosure 64. The second gas treatment section 62, and respectively the second enclosure 64, is provided with a gas inlet 66 and a gas outlet 68 with a flange or alike. The second gas treatment section is a gas tight unit through which the exhaust gas may be arranged to flow by feeding the gas in via the gas inlet 66 into the enclosure and taking the gas out of the enclosure via the gas outlet 68. In the enclosure there is a second gas treatment unit 70 arranged through which the gas is arranged to flow and simultaneously subjected to a treatment as will be explained later. Now the first gas treatment section 52, and the first enclosure 54 respectively, is arranged within the second gas treatment section 62 so that only its gas inlet 56 and gas outlet 58 open outside the second enclosure 64.

The exhaust gas outlet 14 of the piston engine is connected to the gas inlet 56 of the first gas treatment section 52. Thus the exhaust gas is at considerably high temperature i.e. at its exit temperature. The first gas treatment section comprises according to an embodiment of the invention an oxidation catalyst, i.e. an oxicat, performing treatment of the exhaust gas. The oxicat is a flow-through exhaust device that contains e.g. a honeycomb structure covered with a layer of chemical catalyst. This layer contains material, which interacts with exhaust gas catalyzing reactions which oxidize pollutants in the exhaust gas stream, thereby reducing poisonous emissions. The exit temperature of the exhaust gas is advantageous for such reactions and treatment. The pressure in the first enclosure is for example about 6 bar when the engine is operating.

The gas outlet 58 of the first gas treatment section 52 is connected to the first turbine part 20.1 which provides work for the first compressor part 18.1. The first turbine part 20.1 is in turn connected to the gas inlet 66 of the second gas treatment section 62 which is, as mentioned, enclosing the first gas treatment section 52. The pressure and temperature of the exhaust gas has been decreased by the work done by the first turbine part 20.1 from the exit temperature and pressure to a second lower temperature and pressure. The pressure in the second enclosure is for example about 3 bar when the engine is operating. The second gas treatment section 62 comprises according to an embodiment of the invention a selective catalytic reduction (SCR) unit for reducing nitrogen oxide (NOx) emissions. The temperature of the exhaust gas leaving the first turbine part 20.1 is advantageous for such reactions and treatment. The arrangement is also provided with an inlet 72 for reductant used in SCR - process run in the second gas treatment section 62.

The gas outlet 68 of the second gas treatment section 62 is connected to the second turbine part 20.2 which in turn provides work for the second compressor part 18.2.

According an embodiment of the invention the longitudinal cross section of the second gas treatment section 62 is annular and the SCR unit is arranged around the first gas treatment section 52.

According another embodiment of the invention the longitudinal cross section of the second gas treatment section 62 is rectangular or of other shape and the SCR unit is arranged around the first gas treatment section 52.

This way the pressure prevailing in the second enclosure 64 being greater than the ambient pressure when in operation, reduces the requirement of the first enclosure against stress caused by pressure inside the first enclosure since the pressure difference between the enclosures is substantially small. Additionally an elevated temperature of the second enclosure 64 reduces the heat losses of the first enclosure and facilitates maintaining advantageous circumstances for the reaction taken place in the oxicat arranged in the first enclosure.

The number of actual turbochargers may vary so that there is a high pressure stage i.e. the first turbocharger unit 16.1 may comprises more than one turbocharger and that there is a low pressure stage i.e. the second turbocharger unit 16.2 may comprises more than one turbocharger, as well. In the figures the turbocharger units are placed at opposite ends of the engine but other positions are also possible.

According to an embodiment of the invention the gas inlet 56 of the first enclosure 54 and the gas outlet 68 of the second enclosure 64 are arranged at a first end of the arrangement 50, and the gas outlet 58 of the first enclosure 54 and the gas inlet 66 of the second enclosure 64 are arranged at a second end of the arrangement 50. Thus the arrangement operates thermally to some extent as a counter flow heat exchanger.

As can be seen from the Figure 1 there is a first control valve 74 arranged at the gas inlet 56 of the first enclosure 54 and a by-pass channel 76 with a second control valve 78 therein. The by-pass channel connect the exhaust manifold 14 directly to the inlet of the first turbine part 20.1 which allows the exhaust gases by-passing the first gas treatment section 52 when desired.

Figure 2 depicts an embodiment of the invention which is otherwise similar and operates similarly to that of Figure 1 except the connection of the arrangement 50 to the exhaust outlet 14 of the engine 10. In figure 2 the by-pass channel 76 is provided with a selection valve 78' by means of which the exhaust gases may be routed to one of the alternative direction i.e. through the first gas treatment section 52 or directly to the first turbine part 20.1. In all other respects the arrangement of figure 2 equals to that in figure 1.

Figure 3 depicts an embodiment of the invention which is otherwise similar and operates similarly to that of figure 1 except the connection of the arrangement 50 to the exhaust outlet 14 of the engine 10 and the length of the arrangement 50. In figure 3 the by-pass channel 76 is connected to each cylinder 12 of the engine and each cylinder is provided with a dedicated selection valve 78' by means of which the exhaust gases may be routed to one of the alternative direction i.e. through the first gas treatment section 52 or directly to the first turbine part 20.1. The length of the arrangement 50 is such that is extends from one end of the engine to the other end of the engine. Even if not shown the arrangement may comprises several stages of the first gas treatment unit 60 and the second gas treatment unit 70. In all other respects the arrangement of figure 3 equals to that in figure 1.

In Figure 4 there is shown another embodiment of the invention. There is an internal combustion piston engine 10 shown. Each of the cylinders (not shown) of the engine is in connection with an exhaust manifold 14 acting as an exhaust gas outlet though which the exhaust gases are removed from the engine.

Also in this embodiment the engine 10 is provided with a first turbocharger unit 16.1 having a first compressor part 18.1 and a first turbine part 20.1. The engine is also provided with a second turbocharger unit 16.2 having a second compressor part 18.2 and a second turbine part 20.2. In the embodiment of figure 1 the compressor parts are connected in series to supply pressurized combustion air to the engine. The first turbocharger unit 16.1 is arranged to the combustion engine at a first location and the second turbocharger unit 16.2 is arranged to the combustion engine at a second, different location. Here the first turbocharger unit 16.1 is arranged to a first end of the combustion engine and the second turbocharger unit 16.2 is arranged to a second end of the combustion engine.

The piston engine provided with an arrangement 50 for treating exhaust gases. The distance between the first and the second locations may be used according to an embodiment of the invention to place the arrangement for treating exhaust gases beside, or on top of the engine.

The arrangement 50 for treating exhaust gases comprises a first gas treatment section 52 arranged in a first enclosure 54. The first gas treatment section and also the first enclosure 54 is provided with a gas inlet 56 and a gas outlet 58 with a flange or alike. The first gas treatment section is a gas tight unit through which the exhaust gas may be arranged to flow by feeding the gas in via the gas inlet 56 into the enclosure and taking the gas out of the enclosure via the gas outlet 58. In the enclosure there is a first gas treatment unit 60 arranged through which the gas is arranged to flow and simultaneously subjected to a treatment as will be explained later.

Further, the arrangement 50 for treating exhaust gases comprises a second gas treatment section 62 arranged in a second enclosure 64. The second gas treatment section 62, and respectively the second enclosure 64, is provided with a gas inlet 66 and a gas outlet 68 with a flange or alike, also at the opposite ends of the arrangement 50. The second gas treatment section is a gas tight unit through which the exhaust gas may be arranged to flow by feeding the gas in via the gas inlet 66 into the enclosure and taking the gas out of the enclosure via the gas outlet 68. In the second enclosure 64 there is a second gas treatment unit 70 arranged through which the gas is arranged to flow and simultaneously subjected to a treatment as will be explained later. Now the first gas treatment section 52, and the first enclosure 54 respectively, is arranged within the second gas treatment section 62 so that only its gas inlet 56 and gas outlet 58 open outside the second enclosure 64.

The arrangement 50 for treating exhaust gases further comprises a third enclosure 80 which is also provided with a gas inlet 82 and a gas outlet 84 with a flange or alike, also at the opposite ends of the arrangement 50. Now, the first gas treatment section 52, and the first enclosure 54 respectively, the second gas treatment section 62 and the second enclosure 64 respectively are arranged within the third enclosure 80 so that only gas inlets 56, 66 and gas outlets 58, 68 open outside the third enclosure 80. Even if not shown in the figure 4, but the third enclosure may be used for further processing equipments. The third enclosure may be provided with third treatment section which may comprise one or more of the following: a heat exchanger and CO₂ reduction device, silencer and particulate material filter.

The exhaust gas outlet 14 of the piston engine is connected to the gas inlet 56 of the first gas treatment section 52. Thus the exhaust gas is at considerably high temperature i.e. at its exit temperature. The first gas treatment section comprises according to an embodiment of the invention an oxidation catalyst, i.e. an oxicat, performing treatment of the exhaust gas. The oxicat is a flow through exhaust device that contains e.g. a honeycomb structure covered with a layer of chemical catalyst. This layer contains material, which interacts with exhaust gas catalyzing reactions which oxidize pollutants in the exhaust gas stream, thereby reducing poisonous emissions. The exit temperature of the exhaust gas is advantageous for such reactions and treatment. The pressure in the first enclosure is for example about 6 bar when the engine is operating.

The gas outlet 58 of the first gas treatment section 52 is connected to the first turbine part 20.1 which provides work for the first compressor part 18.1. The first turbine part 20.1 is in turn connected to the gas inlet 66 of the second gas treatment section 62 which is, as mentioned, enclosing the first gas treatment section 52. The pressure and temperature of the exhaust gas has been decreased by the work done by the first turbine part 20.1 from the exit temperature and pressure to a second lower temperature and pressure. The second gas treatment section 62 comprises according to an embodiment of the invention a selective catalytic reduction (SCR) unit for reducing nitrogen oxide (NOx) emissions. The temperature of the exhaust gas leaving the first turbine part 20.1 is advantageous for such reactions and treatment. The arrangement is also provided with an inlet 72 for reductant used in SCR - process.

The gas outlet 68 of the second gas treatment section 62 is connected to the second turbine part 20.2 which in turn provides work for the second compressor part 18.2. The second turbine part 20.2 is in turn connected to the gas inlet 82 of the third enclosure 80 which is, as mentioned, enclosing the first and the second enclosures. The pressure and temperature of the exhaust gas has been further decreased by the work done by the second turbine part 20.1. The pressure in the third enclosure is for example about 0,2 - 0,5 bar when the engine is operating. The gas outlet 84 of the third enclosure 80 may be connected (not show) to an exhaust ducting or further processing devices.

The longitudinal cross section of the second gas treatment section 62 is annular and the SCR unit is arranged around the first gas treatment section 52 and the oxidation catalyst. Also the third enclosure has longitudinal annular cross section.

This way the pressure prevailing in the third enclosure 80 and in the second enclosure 64 being greater than the ambient pressure when in operation, reduces the requirement of the first enclosure, and the second enclosure 64 respectively, against stress caused by pressure inside the first enclosure and the second enclosure 64 respectively, since the pressure difference between the enclosures is substantially small. Additionally an elevated temperature of the third enclosure and second enclosure 64 reduces the heat losses of the first enclosure and facilitates maintaining advantageous circumstances for the reaction taken place in the oxicat arranged in the first enclosure.

According to an embodiment of the invention the gas inlet 56 of the first enclosure 54, the gas outlet 68 of the second enclosure 64 and the gas inlet of the third enclosure are arranged at a first end of the arrangement 50, and the gas outlet 58 of the first enclosure 54, the gas inlet 66 of the second enclosure 64 and the gas outlet of the third enclosure are arranged at a second end of the arrangement 50. Thus the arrangement operates thermally to some extent as a counter flow heat exchanger.

The number of actual turbochargers may vary so that there is a high pressure stage i.e. the first turbocharger unit 16.1 may comprises more than one turbocharger and that there is a low pressure stage i.e. the second turbocharger unit 16.2 may comprises more than one turbocharger, as well. Advantageously the turbocharger units are placed at opposite ends of the engine.

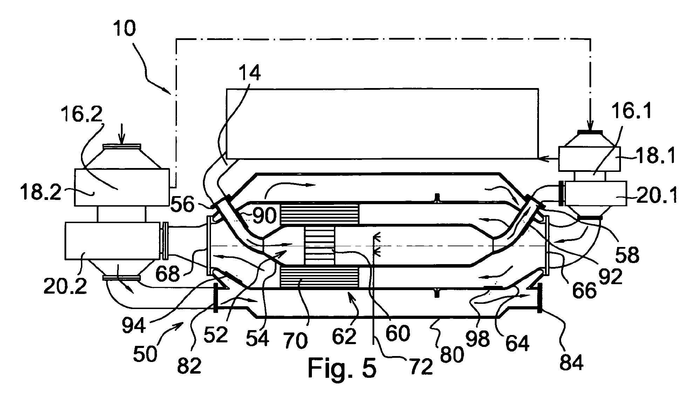

In Figure 5 there is shown an embodiment of the invention which is otherwise similar and operates similarly to that of figure 4 except that the following features are not shown in figure 1, although may still be combined with such an embodiment.

In Figure 5 the first enclosure 54 comprises a first internal valve 90 which controls a direct flow path between the gas inlet 56 of the first enclosure and gas outlet 68 of the second enclosure. The first internal valve 90 operates as a waste gate for the first turbocharger unit 16.1 which may pass exhaust gas directly from the engine outlet 14 to the inlet of the second turbocharger unit 16.2 by-passing also both the first gas treatment section 52 and the second gas treatment section 62. In other words, the exhaust gas may by-pass the first turbine section into the second enclosure 64. The arrangement comprises in addition or alternatively to the first internal valve 90 a second internal valve 92 in the first enclosure. The second internal valve 92 controls a direct flow path between the gas outlet 58 of the first enclosure and gas inlet 66 of the second enclosure. The second internal valve also operates as a waste gate for the first turbocharger unit 16.1 which may pass exhaust treated in the first gas treatment section 52 to the outlet of the first turbocharger unit 16.1 to be treated also in the second gas treatment section 62. In other words, the exhaust gas may by-pass the first exhaust gas treatment section 52 and the first turbine section into the second enclosure 64.

Further second enclosure 64 comprises a third internal valve 96 which controls a direct flow path between the gas outlet 68 of the second enclosure and gas inlet 82 of the third enclosure. The third internal valve operates as a waste gate for the second turbocharger unit 16.2. The arrangement comprises in addition or alternatively to the third internal valve 96 a fourth internal valve 98 in the second enclosure. The fourth internal valve 98 controls a direct flow path between the gas inlet 66 of the second enclosure and gas outlet 84 of the third enclosure by-passing also the second gas treatment section 62.

In the figure 5 there is also shown a feature, which also may be used in connected with other disclosed embodiments, comprising an inlet 72' for reductant used in SCR process in the second gas treatment section 62. In this embodiment the reductant inlet is liquid inlet arranged upstream the first turbocharger unit 16.1. Positioning the reductant inlet at this position makes it possible to inject liquid based reductant which simultaneously provides a means for controlling the gas temperature entering the turbine part. This reduces a risk of overheating the turbocharger due to hydrocarbon residue oxidation in the oxicat.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such a combination is technically feasible.

## Claims

1. Arrangement (50) for reducing exhaust gas emissions of an internal combustion piston engine (10) comprising a first gas treatment section (52) arranged in a first enclosure (54) comprising a gas inlet (56) and a gas outlet (58), and a second gas treatment section (62) arranged in a second enclosure (64) comprising a gas inlet and a gas outlet, in which the first enclosure (54) is enclosed by the second enclosure (64) and that the gas inlet and the gas outlet of the first enclosure open outside the second enclosure, **characterized in that** first gas treatment section (52) comprises an oxidation catalyst and a second gas treatment section (62) comprises a SCR unit.

2. Arrangement (50) for treating exhaust gases of an internal combustion piston engine (10) according to claim 1, **characterized in that** the gas inlet of the first enclosure (54) and the gas outlet of the second enclosure are arranged at a first end of the arrangement, and that the gas outlet of the first enclosure and the gas inlet of the second enclosure are arranged at a second end of the arrangement.

3. Arrangement (50) for treating exhaust gases of an internal combustion piston engine (10) according to claim 1 or 2, **characterized in that** the second gas treatment section (62) is arranged around the first gas treatment section (52).

4. Arrangement (50) for treating exhaust gases of an internal combustion piston engine (10) according to anyone of the preceding claims 1 - 3, **characterized in that** the first enclosure (54) and the second enclosure are enclosed by a third enclosure (80).

5. Arrangement (50) for treating exhaust gases of an internal combustion piston engine (10) according anyone of the preceding claims 1 - 4, **characterized in that** the arrangement comprises a first internal valve (90) which controls a direct flow path between the gas inlet (56) of the first enclosure (54) and gas outlet (68) of the second enclosure (64).

6. Arrangement (50) for treating exhaust gases of an internal combustion piston engine (10) according to claim 5, **characterized in that** the arrangement comprises a second internal valve (92) which controls a direct flow path between the gas outlet of the first enclosure (54) and gas inlet (66) of the second enclosure (64).

7. Arrangement (50) for treating exhaust gases (50) of an internal combustion piston engine (10) according to claim 4, **characterized in that** the arrangement comprises a third internal valve (94) which controls a direct flow path between the gas outlet (68) of the second enclosure and gas inlet (82) of the third enclosure.

8. Internal combustion piston engine (10) comprising a first turbocharger unit (16.1) having a first compressor part (18.1) and a first turbine part (20.1), and a second turbocharger unit (16.2) having a second compressor part (18.2) and a second turbine part (20.2), said units arranged in to the combustion engine at a first location and at a second location, respectively, **characterized in that** the piston engine provided with an arrangement (50) for reducing exhaust gas emissions according to anyone of the preceding claims 1-7 and that the gas inlet and the gas outlet of the first enclosure open outside the second enclosure, and that an exhaust gas outlet of the piston engine (10) is connected to the gas inlet (56) of the first gas treatment section (52), and that the gas outlet (58) of the first gas treatment section is connected to the first turbine part (20.1), and that the first turbine part is connected to the gas inlet (66) of the second gas treatment section (62), and that the gas outlet of the second gas treatment section is connected to the second turbine part (20.2).

9. Method of treating exhaust gas of an internal combustion piston engine (10) comprising the steps of exhausting exhaust gas from the combustion engine, leading exhaust gas into a first gas treatment section (52) comprising an oxidation catalyst and subjecting the gas to an oxidation process, leading exhaust gas from the first gas treatment section to a first turbine part (20.1) of the engine, causing the exhaust gas to perform work in the first turbine part of the engine operating a first compressor part (18.1) of the engine, leading exhaust gas from the first turbine part to a second gas treatment section (62) comprising a selective catalytic reduction unit and subjecting the gas to a selective catalytic reduction process, **characterized by** arranging the exhaust gas in the first exhaust gas treatment section (52) to flow so that it is surrounded by the flow of the exhaust gas in the second gas treatment section (62).

10. Method according to claim 9, **characterized** controlling (90, 92) a portion of the exhaust gas to by-pass the first turbine section into the second enclosure (64) comprising the second gas treatment section (62).

11. Method according to claim 9 or 10, **characterized** controlling (90) the portion of the exhaust gas to by-pass the first exhaust gas treatment section (52) and the first turbine section into the second enclosure (64) comprising the second gas treatment section (62).

12. Method according to claim 9, 10 or 11, **characterized** controlling (94) a portion of the exhaust gas to by-pass the second turbine section.

13. Method according to anyone of the preceding claims 9 - 12, **characterized by** transferring heat from exhaust gas during the first gas treatment process and recovering the heat to the exhaust gas during the second gas treatment process.

## Patentansprüche

1. Anordnung (50) zum Verringern von Abgasemissionen einer Kolben-Verbrennungskraftmaschine (10), wobei die Anordnung eine in einem ersten Gehäuse (54) angeordnete erste Gasbehandlungssektion (52), die einen Gaseinlass (56) und einen Gasauslass (58) umfasst, und eine in einem zweiten Gehäuse (64) angeordnete zweite Gasbehandlungssektion (62), die einen Gaseinlass und einen Gasauslass umfasst, umfasst, wobei das erste Gehäuse (54) durch das zweite Gehäuse (64) umschlossen wird, **dadurch gekennzeichnet, dass** die erste Gasbehandlungssektion (52) einen Oxidationskatalysator umfasst und eine zweite Gasbehandlungssektion (62) eine SCR-Einheit umfasst.

2. Anordnung (50) zum Behandeln von Abgasen einer Kolben-Verbrennungskraftmaschine (10) nach Anspruch 1, **dadurch gekennzeichnet, dass** der Gaseinlass des ersten Gehäuses (54) und der Gasauslass des zweiten Gehäuses an einem ersten Ende der Anordnung angeordnet sind und dass der Gasauslass des ersten Gehäuses und der Gaseinlass des zweiten Gehäuses an einem zweiten Ende der Anordnung angeordnet sind.

3. Anordnung (50) zum Behandeln von Abgasen einer Kolben-Verbrennungskraftmaschine (10) nach Anspruch 1 oder 2, **dadurch gekennzeichnet, dass** die zweite Gasbehandlungssektion (62) um die erste Gasbehandlungssektion (52) angeordnet ist.

4. Anordnung (50) zum Behandeln von Abgasen einer Kolben-Verbrennungskraftmaschine (10) nach einem der vorhergehenden Ansprüche 1 bis 3, **dadurch gekennzeichnet, dass** das erste Gehäuse (54) und das zweite Gehäuse durch ein drittes Gehäuse (80) umschlossen werden.

5. Anordnung (50) zum Behandeln von Abgasen einer Kolben-Verbrennungskraftmaschine (10) nach einem der vorhergehenden Ansprüche 1 bis 4, **dadurch gekennzeichnet, dass** die Anordnung ein erstes inneres Ventil (90) umfasst, das eine direkte Strömungsbahn zwischen dem Gaseinlass (56) des ersten Gehäuses (54) und dem Gasauslass (68) des zweiten Gehäuses (64) steuert.

6. Anordnung (50) zum Behandeln von Abgasen einer Kolben-Verbrennungskraftmaschine (10) nach Anspruch 5, **dadurch gekennzeichnet, dass** die Anordnung ein zweites inneres Ventil (92) umfasst, das eine direkte Strömungsbahn zwischen dem Gasauslass des ersten Gehäuses (54) und dem Gaseinlass (66) des zweiten Gehäuses (64) steuert.

7. Anordnung (50) zum Behandeln von Abgasen (50) einer Kolben-Verbrennungskraftmaschine (10) nach Anspruch 4, **dadurch gekennzeichnet, dass** die Anordnung ein drittes inneres Ventil (94) umfasst, das eine direkte Strömungsbahn zwischen dem Gasauslass (68) des zweiten Gehäuses und dem Gaseinlass (82) des dritten Gehäuses steuert.

8. Kolben-Verbrennungskraftmaschine (10), die eine erste Turboladereinheit (16.1), die einen ersten Verdichterteil (18.1) und einen ersten Turbinenteil (20.1) aufweist, und eine zweite Turboladereinheit (16.2), die einen zweiten Verdichterteil (18.2) und einen zweiten Turbinenteil (20.2) aufweist, umfasst, wobei die Einheiten in der Verbrennungskraftmaschine an einer ersten Position beziehungsweise einer zweiten Position angeordnet sind, **dadurch gekennzeichnet, dass** die Kolbenkraftmaschine mit einer Anordnung (50) zum Behandeln von Abgasen einer Kolben-Verbrennungskraftmaschine (10) nach einem der vorhergehenden Ansprüche 1 bis 7 versehen ist und dass sich der Gaseinlass und der Gasauslass des ersten Gehäuses außerhalb des zweiten Gehäuses öffnen und dass ein Abgasauslass der Kolbenkraftmaschine (10) mit dem Gaseinlass (56) der ersten Gasbehandlungssektion (52) verbunden ist und dass der Gasauslass (58) der ersten Gasbehandlungssektion mit dem ersten Turbinenteil (20.1) verbunden ist und dass der erste Turbinenteil mit dem Gaseinlass (66) der zweiten Gasbehandlungssektion (62) verbunden ist und dass der Gasauslass der zweiten Gasbehandlungssektion mit dem zweiten Turbinenteil (20.2) verbunden ist.

9. Verfahren zum Behandeln von Abgas einer Kolben-Verbrennungskraftmaschine (10), das die Schritte des Ausstoßens von Abgas aus der Verbrennungskraftmaschine, des Leitens von Abgas in eine erste Gasbehandlungssektion (52), die einen Oxidationskatalysator umfasst, und des Unterwerfens des Gases einem Oxidationsvorgang, des Leitens von Abgas von der ersten Gasbehandlungssektion zu einem ersten Turbinenteil (20.1) der Kraftmaschine, des Veranlassens, dass das Abgas in dem ersten Turbinenteil der Kraftmaschine Arbeit verrichtet, die einen ersten Verdichterteil (18.1.) der Kraftmaschine betreibt, des Leitens von Abgas von dem ersten Turbinenteil zu einer zweiten Gasbehandlungssektion (62), die eine selektive katalytische Reduktionseinheit umfasst, und des Unterwerfens des Gases einem selektiven katalytischen Reduktionsvorgang umfasst, **gekennzeichnet durch** das Anordnen des Abgases in der ersten Abgasbehandlungssektion (52), dass es so strömt, dass es von dem Strom des Abgases in der zweiten Gasbehandlungssektion (62) umgeben ist.

10. Verfahren nach Anspruch 9, **gekennzeichnet durch** das Kontrollieren (90, 92) eines Teils des Abgases, so dass er die erste Turbinensektion in das zweite Gehäuse (64), das die zweite Gasbehandlungssektion (62) umfasst, umgeht.

11. Verfahren nach Anspruch 9 oder 10, **gekennzeichnet durch** das Kontrollieren (90) des Teils des Abgases, so dass er die erste Gasbehandlungssektion (52) und die erste Turbinensektion in das zweite Gehäuse (64), das die zweite Gasbehandlungssektion (62) umfasst, umgeht.

12. Verfahren nach Anspruch 9, 10 oder 11, **gekennzeichnet durch** das Kontrollieren (94) eines Teils des Abgases, so dass er die zweite Turbinensektion umgeht.

13. Verfahren nach einem der vorhergehenden Ansprüche 9 bis 12, **gekennzeichnet durch** das Übertragen von Wärme von Abgas während des ersten Gasbehandlungsvorgangs und das Wiedergewinnen der Wärme zu dem Abgas während des zweiten Gasbehandlungsvorgangs.

## Revendications

1. Système (50) pour réduire des émissions de gaz d'échappement d'un moteur à combustion interne à piston (10) comprenant une première section de traitement de gaz (52) disposée dans une première enceinte (54) comprenant une arrivée de gaz (56) et une sortie de gaz (58), et une deuxième section de traitement de gaz (62) disposée dans une deuxième enceinte (64) comprenant une arrivée de gaz et une sortie de gaz, dans lequel la première enceinte (54) est entourée par la deuxième enceinte (64) et l'arrivée de gaz et la sortie de gaz de la première enceinte s'ouvrant à l'extérieur de la deuxième enceinte,
**caractérisé en ce que** la première section de traitement de gaz (52) comprend un catalyseur à oxydation et **en ce que** la deuxième section de traitement de gaz (62) comprend une unité SCR.

2. Système (50) pour traiter des gaz d'échappement d'un moteur à combustion interne à piston (10) selon la revendication 1,
**caractérisé en ce que** l'arrivée de gaz de la première enceinte (54) et la sortie de gaz de la deuxième enceinte sont disposées à une première extrémité du système, et **en ce que** la sortie de gaz de la première enceinte et l'arrivée de gaz de la deuxième enceinte sont disposées à une deuxième extrémité du système.

3. Système (50) pour traiter des gaz d'échappement d'un moteur à combustion interne à piston (10) selon la revendication 1 ou 2,
**caractérisé en ce que** la deuxième section de traitement de gaz (62) est disposée autour de la première section de traitement de gaz (52).

4. Système (50) pour traiter des gaz d'échappement d'un moteur à combustion interne à piston (10) selon l'une quelconque des revendications 1 - 3 précédentes,
**caractérisé en ce que** la première enceinte (54) et la deuxième enceinte sont entourées par une troisième enceinte (80).

5. Système (50) pour traiter des gaz d'échappement d'un moteur à combustion interne à piston (10) selon l'une quelconque des revendications 1 - 4 précédentes,
**caractérisé en ce que** le système comprend une première valve interne (90) qui contrôle un trajet de flux direct entre l'arrivée de gaz (56) de la première enceinte (54) et une sortie de gaz (68) de la deuxième enceinte (64).

6. Système (50) pour traiter des gaz d'échappement d'un moteur à combustion interne à piston (10) selon la revendication 5,
**caractérisé en ce que** le système comprend une deuxième valve interne (92) qui contrôle un trajet de flux direct entre la sortie de gaz de la première enceinte (54) et une arrivée de gaz (66) de la deuxième enceinte (64).

7. Système (50) pour traiter des gaz d'échappement (50) d'un moteur à combustion interne à piston (10) selon la revendication 4,
**caractérisé en ce que** le système comprend une troisième valve interne (94) qui contrôle un trajet de flux direct entre la sortie de gaz (68) de la deuxième enceinte et une arrivée de gaz (82) de la troisième enceinte.

8. Moteur à combustion interne à piston (10) comprenant une première unité de turbocompresseur (16.1) ayant un premier élément de compresseur (18.1) et un premier élément de turbine (20.1), et une deuxième unité de turbocompresseur (16.2) ayant un deuxième élément de compresseur (18.2) et un deuxième élément de turbine (20.2), lesdits unités étant disposées à l'intérieur du moteur à combustion respectivement à un premier emplacement et à un deuxième emplacement,
**caractérisé en ce que** le moteur à piston est doté d'un système (50) pour réduire des émissions de gaz d'échappement selon l'une quelconque des revendications 1-7 précédentes et **en ce que** l'arrivée de gaz et la sortie de gaz de la première enceinte s'ouvrent à l'extérieur de la deuxième enceinte, et **en ce qu'**une sortie de gaz d'échappement du moteur à piston (10) est raccordée à l'arrivée de gaz (56) de la première section de traitement de gaz (52), et **en ce que** la sortie de gaz (58) de la première section de traitement de gaz est raccordée au premier élément de turbine (20.1), et **en ce que** le premier élément de turbine est raccordé à l'arrivée de gaz (66) de la deuxième section de traitement de gaz (62), et **en ce que** la sortie de gaz de la deuxième section de traitement de gaz est raccordée au deuxième élément de turbine (20.2).

9. Procédé pour traiter du gaz d'échappement d'un moteur à combustion interne à piston (10) comprenant les étapes consistant à faire s'échapper du gaz d'échappement du moteur à combustion, à guider le gaz d'échappement dans une première section de traitement de gaz (52) comprenant un catalyseur à oxydation et à soumettre le gaz à un processus d'oxydation, à guider le gaz d'échappement de la première section de traitement de gaz vers un premier élément de turbine (20.1) du moteur en faisant en sorte que le gaz d'échappement effectue un travail dans le premier élément de turbine du moteur faisant fonctionner un premier élément de compresseur (18.1) du moteur, à guider le gaz d'échappement du premier élément de turbine vers une deuxième section de traitement de gaz (62) comprenant une unité de réduction catalytique sélective et à soumettre le gaz à une processus de réduction catalytique sélective,
**caractérisé en ce que** l'on fait en sorte que le gaz d'échappement dans la première section de traitement de gaz d'échappement (52) circule de manière à être entouré par le flux du gaz d'échappement dans la deuxième section de traitement de gaz (62).

10. Procédé selon la revendication 9, **caractérisé par** le contrôle (90, 92) d'une partie du gaz d'échappement afin qu'elle contourne la première section de turbine vers l'intérieur de la première enceinte (64) comprenant la deuxième section de traitement de gaz (62).

11. Procédé selon la revendication 9 ou 10, **caractérisé par** le contrôle (90) de la partie du gaz d'échappement afin qu'elle contourne la première section de traitement de gaz d'échappement (52) et la première section de turbine vers l'intérieur de la deuxième enceinte (64) comprenant la deuxième section de gaz (62).

12. Procédé selon la revendication 9, 10 ou 11, **caractérisé par** le contrôle (94) d'une partie du gaz d'échappement afin qu'elle contourne la deuxième section de turbine.

13. Procédé selon l'une quelconque des revendications 9 - 12 précédentes, **caractérisé par** le transfert de chaleur provenant du gaz d'échappement pendant le premier processus de traitement de gaz et la récupération de la chaleur pour le gaz d'échappement pendant le deuxième processus de traitement de gaz.
